(19) **Europäisches Patentamt**

**European Patent Office**

**Office européen des brevets**

(11) **EP 1 501 628 B1**

(12) **EUROPEAN PATENT SPECIFICATION**

(45) Date of publication and mention
of the grant of the patent:
**14.06.2006 Bulletin 2006/24**

(51) Int Cl.:
**B01F 15/02** (2006.01)      **B01F 7/16** (2006.01)
**B01F 13/10** (2006.01)      **B01F 15/04** (2006.01)

(21) Application number: **03719736.5**

(22) Date of filing: **11.04.2003**

(86) International application number:
**PCT/US2003/011428**

(87) International publication number:
**WO 2003/086604 (23.10.2003 Gazette 2003/43)**

(54) **CONTROL SYSTEM AND METHOD FOR MIXING OF SLURRY**

STEUERSYSTEM UND -VERFAHREN ZUM MISCHEN EINER AUFSCHLÄMMUNG

SYSTEME ET PROCEDE DE COMMANDE DE PETRISSAGE D'UNE PATE

(84) Designated Contracting States:
**AT BE BG CH CY CZ DE DK EE ES FI FR GB GR
HU IE IT LI LU MC NL PT RO SE SI SK TR**

(30) Priority: **11.04.2002 US 372329 P**

(43) Date of publication of application:
**02.02.2005 Bulletin 2005/05**

(73) Proprietor: **Mobius Technologies, Inc.
Grass Valley, CA 95945 (US)**

(72) Inventors:
• **VILLWOCK, Robert, Donald
Grass Valley, CA 95945 (US)**
• **COCHRAN, Joseph, Richard
Grass Valley, CA 95949 (US)**
• **MARTEL, Bryan, Louis
Nevada City, CA 95959 (US)**

(74) Representative: **Smith, Peter James
Serjeants,
25 The Crescent,
King Street
Leicester LE1 6RX (GB)**

(56) References cited:
US-A- 4 436 429          US-A- 4 721 448
US-A- 4 859 072          US-A- 5 222 807
US-A- 5 571 281          US-A- 5 580 168
US-A- 5 951 161          US-A- 6 039 470

• **PATENT ABSTRACTS OF JAPAN vol. 2000, no.
17, 5 June 2001 (2001-06-05) & JP 05 253412 A
(EASTMAN KODAK CO), 5 October 1993
(1993-10-05)**

## Description

1. Field of the Invention

This invention relates to a control system and method for continuously preparing mixtures of powdered solids in liquids, removal of entrained bubbles from such mixtures, and for controlling such processes. The invention is particularly useful for the preparation of bubble-free slurries of finely ground polyurethane-foam particles in polyol, and for the preparation of new polyurethane articles that contain the finely ground polyurethane-foam particles.

2. Background of the System

"Polyurethane" (PUR) describes a general class of polymers prepared by polyaddition polymerization of polyisocyanate molecules and one or more active-hydrogen compounds. "Active-hydrogen compounds" include water and polyfunctional hydroxyl-containing (or "polyhydroxyl") compounds such as diols, polyester polyols, and polyether polyols. Active-hydrogen compounds also include polyfunctional amino-group-containing compounds such as polyamines and diamines. A common example of an active-hydrogen compound is a polyether polyol such as a glycerin-initiated polymer of ethylene oxide or propylene oxide. Polyether polyols useful for slabstock flexible polyurethane foams generally have a molecular weight in the range of 2000 to 6000 g/mol, a functionality in the range of 2 to 7 (preferably about 3), and a viscosity at 25°C generally in the range of 100 to 10,000 mPa-s.

"PUR foams" are formed via a reaction between one or more active-hydrogen compounds and a polyfunctional isocyanate component, resulting in urethane linkages. PUR foams are widely used in a variety of products and applications. These foams may be formed in wide range of densities and may be flexible, semi-flexible, semi-rigid, or rigid foam structures. Generally speaking, "flexible foams" are those that recover their shape after deformation. In addition to being reversibly deformable, flexible foams tend to have limited resistance to applied load and tend to have mostly open cells. "Rigid foams" are those that generally retain the deformed shape without significant recovery after deformation. Rigid foams tend to have mostly closed cells. "Semi-rigid" or "semi-flexible" foams are those that can be deformed, but may recover their original shape slowly, perhaps incompletely. A foam structure is formed by use of so-called "blowing agents." Blowing agents are introduced during foam formation through the volatilization of low-boiling liquids or through the formation of gas due to chemical reaction. For example, a reaction between water and isocyanate forms carbon dioxide ($CO_2$) gas bubbles in PUR foam. This reaction also generates heat and results in urea linkages in the polymer. Additionally, surfactants may be used to stabilize the polymer foam structure during polymerization. Catalysts are used to initiate the polymerization reactions forming the urethane linkages and to control the blowing reaction for forming gas. The balance of these two reactions, which is controlled by the types and amounts of catalysts, is also a function of the reaction temperature. A typical foam recipe includes at least one polyol, at least one isocyanate, and also typically includes water, surfactant, and catalysts, and also optionally includes additional blowing agent, fillers, and additives for color, fire performance, antimicrobial activity, etc.

Polyurethane foam can be ground into fine particles using, for example, cryogenic processes or roll mills (see for example, United States Patent Application #09/748,307 filed December 21, 2000, incorporated herein by reference). These fine particles can then be used to replace chemicals in recipes for new foam. The use of recycled polyurethane foam provides an environmental benefit and often a cost savings.

In order to add polyurethane powder to the recipe, the powder must be mixed with liquid reactants. Further, the slurry must be free of entrained bubbles because they create an undesirable irregular cell structure in the foam, including holes and splits. Powder can be mixed with liquid reactants in a batch process by adding a known mass of powder to a known mass of polyol, mixing thoroughly, and allowing sufficient time (generally about 8 to 48 hours) for entrained bubbles to leave the slurry. Such a natural de-gassing process takes a long time because the slurry has a high viscosity, generally about 500 to 20,000 mPa-s. A continuous process for removal of entrained air is preferred over a batch process because the continuous process would not require waiting for entrained air to leave the slurry naturally, and the continuous processes would not require the large storage capacity necessary to hold the slurry needed for an entire day of foam production.

Document US-A-5 951 161 discloses a control system suitable for continuous mixing of dry powder with liquid to form a suspension.

Methods are desirable for producing bubble-free slurries of fine particles of polyurethane in polyol, and for producing foam with these slurries. Particularly, a need exists for devices and processing methods to take finely ground polyurethane-foam particles, disperse them as a slurry in polyol, remove substantially all entrained bubbles from the slurry, and to use this slurry as a direct replacement for at least some of the polyol in the production of new polyurethane articles. It is further desirable for such a process to be able to run continuously, such that powder and polyol are mixed, de-gassed, and used to make new polyurethane articles without delay. The desired continuous process must be able to deliver bubble-free slurry with an accurately controlled solids concentration at an accurately controlled flow rate.

SUMMARY OF THE INVENTION

The present system comprises a control system and method for the continuous production of substantially bubble-free slurries of solid powders in liquids and for the delivery of such slurries at an accurately controlled concentration and flow rate. The system also comprises a method of controlling the process operation while providing accurate and stable slurry concentration and flow rate.

Powder and liquid (for example, finely ground polyurethane powder and polyol liquid) are delivered continuously to a mixer where they are contacted intimately and a slurry is produced. In the present disclosure, a slurry is defined as a mixture of a liquid and a solid in which at least some of the solid does not dissolve, and is meant to include both mixtures that naturally separate and stable suspensions. The slurry, which may contain entrained air bubbles, is delivered from the mixer to a de-gassing step, where entrained bubbles are continuously removed. Substantially bubble-free slurry is continuously delivered from said de-gassing step to downstream uses.

A feedback control system provides for continuous operation of the process with good control over the slurry concentration and flow rate. The description of the control process begins from the end of the process. The flow rate of the finished slurry is measured, for example by a mass flow meter, preferably by an in-line coriolis-effect mass flow meter. The flow rate measurement is used to control the rate of the pump that is drawing slurry from the bottom of the surge tank. The amount of slurry in the surge tank is measured, for example by a level sensor, preferably by a continuous ultrasonic level sensor. The level measurement is used to control the rate of the transfer pump that is drawing slurry from the bottom of the mix tank and delivering the slurry to the centrifuge. The amount of slurry in the mix tank is measured, for example by a level sensor, preferably by a continuous capacitance level sensor. The level measurement is used to control the reference rate of powder addition to the mixer. The actual rate of powder addition to the mixer is measured, for example by a scale, preferably by a loss-in-weight feeder. The actual rate of powder addition to the mixer is used to determine algebraically the required rate of polyol addition to the mix tank in order to provide the desired slurry concentration. The rate of the polyol supply pump is controlled in this way by the actual rate of powder addition to the mixer and the desired slurry concentration. This control method provides excellent control of the slurry concentration because powder and polyol are always added to the mix tank together in the desired ratio. The control method also provides excellent control of the slurry output flow rate, even if the rate of powder addition to the mix tank is varying.

A better understanding of the features and advantages of the present system will be obtained by reference to the following detailed description of the system and accompanying drawings which set forth an illustrative embodiment in which the principles of the system are utilized.

BRIEF DESCRIPTION OF THE DRAWINGS

FIG. 1 is a process-flow diagram showing a process for the continuous production of substantially bubble-free slurry.
FIG. 2 is a schematic diagram of the disclosed mixer.
FIG. 3 is a schematic diagram of the disclosed mixer of FIG. 2 integrated with a mix tank.
FIG. 4 is a schematic diagram of a centrifuge within a vacuum chamber for removal of entrained air bubbles from a slurry.
FIG. 5 is a schematic diagram of the disclosed surge tank.
FIG. 6 is a schematic diagram showing a process for the continuous production of substantially bubble-free slurry with the disclosed process-control method.
FIG. 7 is a schematic block diagram of one embodiment of a flow rate control system to control the flow rate of a slurry.
FIG. 8 is a schematic block diagram of one embodiment of a fluid level control system to control the fluid level in a surge tank.
FIG. 9a is a schematic block diagram one embodiment of a powder and fluid rate control system to the solids concentration and the fluid level in a mix tank.
FIG. 9b is a schematic block diagram for another embodiment of a powder and fluid rate control system to the solids concentration and the fluid level in a mix tank.
FIG. 9c is a schematic block diagram for yet another embodiment of a powder and fluid rate control system to the solids concentration and the fluid level in a mix tank.
FIG. 10 is a flowchart of the disclosed process for the continuous production of substantially bubble-free slurry.

DETAILED DESCRIPTION OF THE SYSTEM

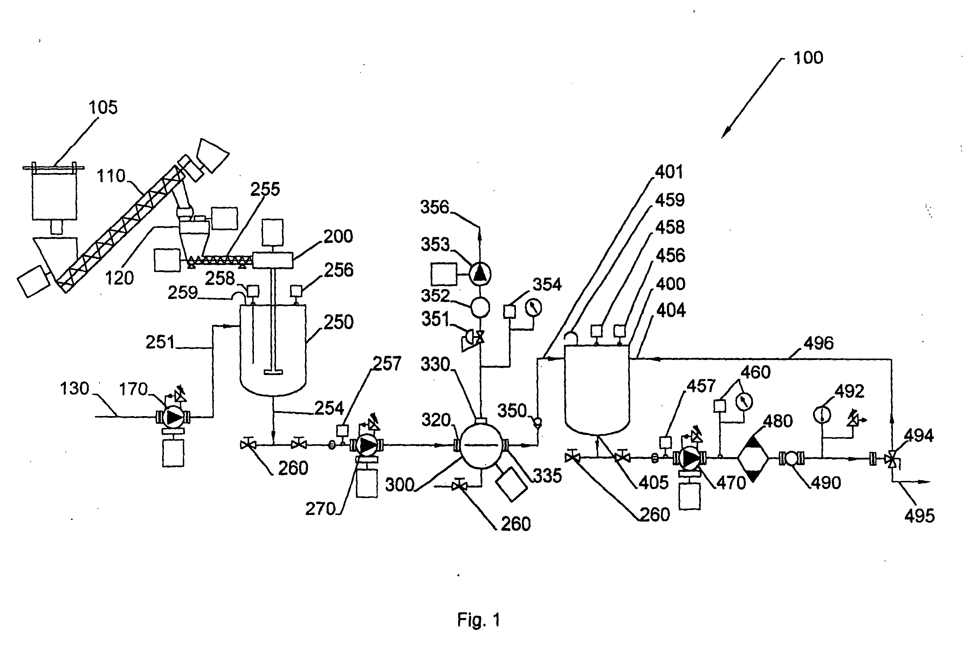

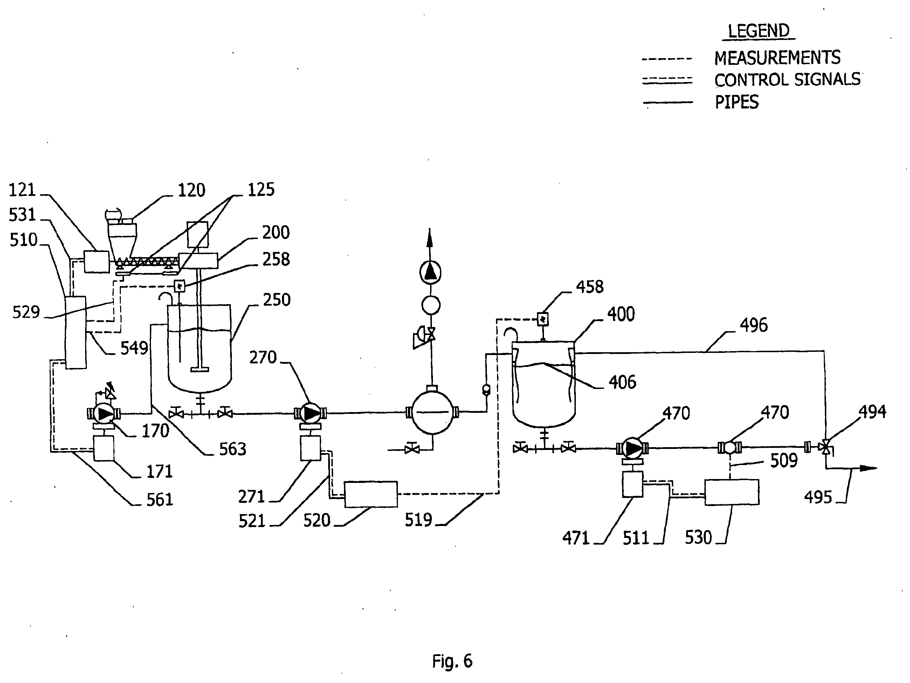

A schematic diagram of a process of the present disclosure 100 is shown in FIG. 1. Solid powder 105 (supplied for example in bulk bags, or from a silo) is conveyed by suitable means 110 (for example, a screw conveyor) to the hopper of a powder feeder 120. For example, the powder feeder may be a loss-in-weight belt, or loss-in-weight screw feeder, or a volumetric powder feeder coupled with a device for measuring powder flow rate, such as an impact flow meter. The powder feeder 120 delivers powder at a known and controlled rate to the mixer 200 (for example the disclosed mixer described in detail below) in tank 250. A liquid component (for example, polyol) is added to tank 250 through inlet 251. This liquid component is added at a known and controlled rate, for example by means of a non-cavitating positive-displacement pump 170, with a known and controlled speed of rotation, drawing from a tank (not shown) or other source of liquid 130. Alternatively, the rate of liquid addition can be measured with a flow meter, or by means of volume or weight changes in the tank or other source of liquid. The mixer 200 in tank 250, as described in detail below, performs the function of thorough mixing of the powder into the liquid, with good dispersion and wet-out of the powder. The mixed slurry, which also generally contains entrained bubbles, exits tank 250 through an outlet 254. In the present disclosure, a slurry is defined as a mixture of a liquid and a solid in which at least some of the solid does not dissolve, and is meant to include both mixtures that naturally separate and stable suspensions. Drain valves 260 are provided throughout the process for cleanup and shutdown. Tank 250 may have a vent 259, a continuous-level sensor 258, a high-level sensor 256, and a low-level sensor 257 for measurement and control (see FIG. 6) of the liquid level in the tank. The ratio of powder addition rate to liquid addition rate to the mixer/tank is held constant.[consider "controlled" rather than "held constant"?]

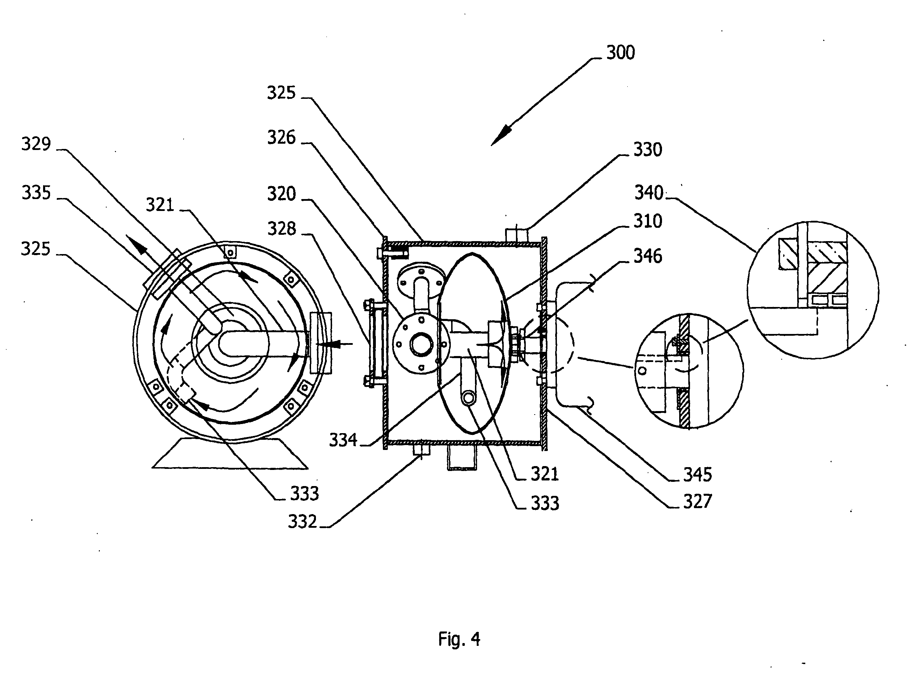

At mix-tank outlet 254, entrained bubbles may typically be present in the slurry at a concentration on the order of about 10% by volume. Mixed slurry is drawn from tank 250 through outlet 254 by any suitable means (gravity, pump, vacuum suction), for example a positive-displacement pump 270, and transferred to inlet 320 of vacuum centrifuge 300. Vacuum centrifuge 300 continuously removes entrained bubbles from the slurry as described in connection with FIG. 4 below. Vacuum is drawn from centrifuge 300 to maintain within it a low absolute pressure, for example less than 1050 mbar, preferably between 1 and 300 mbar. Vacuum is drawn using suitable means, for example vacuum pump 353 with regulator 351, condensate trap 352, pressure measurement device 354, and exhaust to the atmosphere 356. Substantially bubble-free slurry exits the centrifuge 300 through outlet 335. Check valve 350 allows the slurry to pass to an inlet 401 of at least one surge tank 400 without backflow of slurry or air into the centrifuge.

Surge tank 400, or a plurality of such tanks, may be large enough to hold enough slurry for a full day of foam production. In such a case, the process is used to prepare a large batch of substantially bubble-free slurry. FIG. 1 depicts a process that is also suitable for producing slurry continuously and using that slurry for foam production without delay.

Surge tank 400, described in detail below, may have a vent 459, and continuous-level sensor 458, a high-level sensor 456, and a low-level sensor 457 for measurement and control (see FIG. 6) of the liquid level in the tank.

Substantially bubble-free slurry exits the surge tank through outlet 405, drawn by any suitable means (gravity, pump, vacuum suction), for example a non-cavitating positive-displacement pump 470. The mass flow rate is measured with meter 490, for example 490 may be an in-line coriolis-effect mass-flow meter. By means of three-way diverter valve 494, the slurry is transferred to downstream processes (for example, foam manufacture or storage) via conduit 495, or recirculated to inlet 404 of surge tank 400 via conduit 496. The option for recirculation to the surge tank allows simple integration of the process to existing slabstock polyurethane-foam manufacturing plants. For example, valve 494 may be located in close proximity to the mix head of a slabstock machine, mixing process 100 can be running prepared slurry via recirculation line 496, and substantially bubble-free slurry can be available to the foam-manufacture process immediately with a turn of valve 494. Similarly, valve 494 can be used to switch off downstream use of the slurry without interruption of mixing process 100. This effectively decouples the downstream foam-manufacture process from any startup or shutdown transients of mixing process 100. In an integrated plant, valve 494 may be automatically actuated, for example by a downstream process-control system.

Optionally, the prepared slurry may be heated or cooled using heat exchanger 480. The temperature and pressure of the slurry may be measured using meters 492 and 460 respectively. Additional meters (not shown) may measure viscosity, solids concentration, entrained air content, and the like.

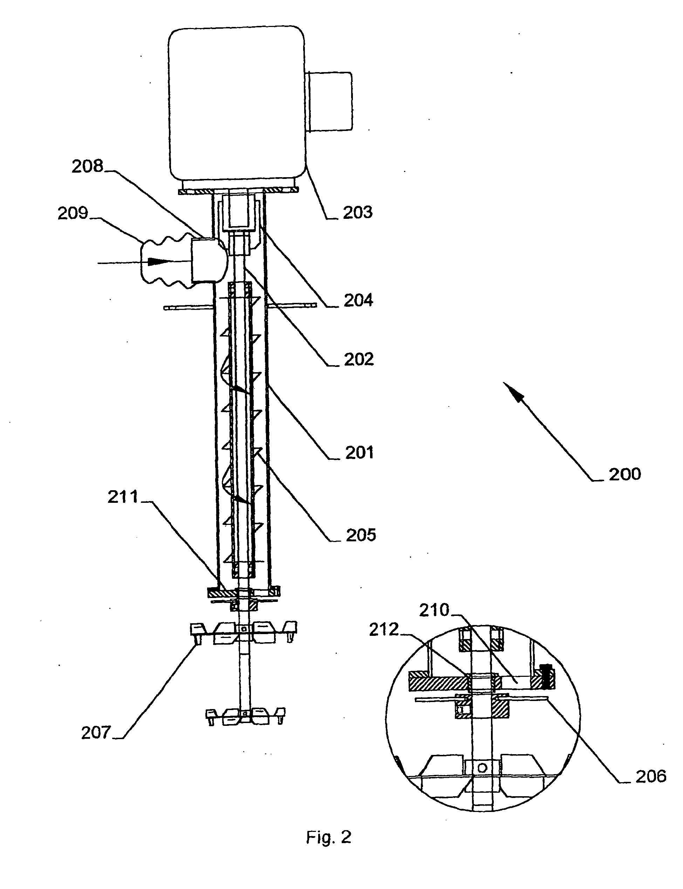

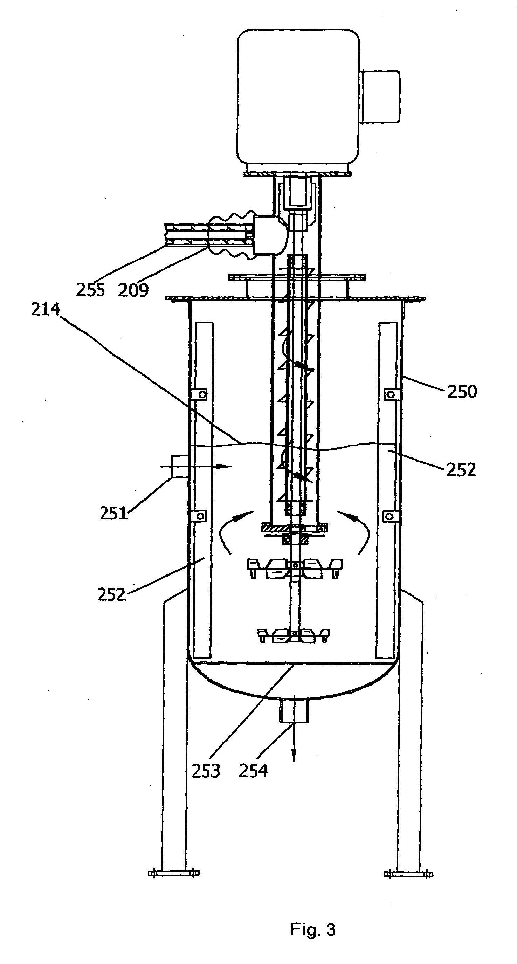

Referring now to FIGS. 2 and 3, the mixer assembly 200 comprises a barrel 201 within which a shaft 202 is rotated by a motor 203 through coupling 204. An auger 205, a lump-breaker 206, and at least one impeller 207 are attached to and rotate with shaft 202. Powder is added to the mixer at a known, controlled rate through port 208. A flexible boot 209 seals the port to the perimeter of powder feeder 255 in such a way as to avoid blowing dust while maintaining mechanical isolation of the mixer from powder feeder. If the powder feeder is a loss-in-weight feeder, mechanical isolation of the feeder from the mix tank is important so that the weight measurement is not biased. Powder drops through port 208 onto auger 205. The auger rapidly moves the powder through barrel 201 to the outlet 210. A bearing plate 211 is positioned at the outlet 210 of the barrel 201 and supports a bearing 212 for shaft 202 by means of a spider (not shown).

The outlet of the barrel 210 is positioned at or below the working liquid level 214 in the tank 250. Powder exits outlet 210 and is rapidly dispersed into the surrounding liquid by lump-breaker 206. The lump-breaker comprises a radial arrangement of stiff pins affixed around a central hub. The pins are long enough to span the entire opening of outlet 210. The lump-breaker is positioned very close to the outlet so that no large lumps of powder may pass.

Impellers 207 are positioned below the lump-breaker and are of suitable size and design to provide multiple turnovers of the tank volume within the mean residence time of the powder. Preferably, at least one impeller is a radial-flow high-shear design. Axial-flow impellers (for example, marine impellers) provide higher flow and more tank turnovers. Preferably, one impeller is placed near the lump-breaker for good mixing, and a second impeller is placed near the bottom of the tank to avoid settling of solids.

The liquid component of the slurry (for example, polyol) is added to tank 250, preferably at a position near the working liquid level 214, by means of at least one inlet 251. The tank preferably has a plurality of baffles 252 to reduce the formation of a vortex. Near the bottom of the tank, a screen plate 253 is attached. The screen plate has a plurality of openings that allow mixed slurry to pass through, but that returns larger un-dispersed lumps of powder for additional mixing. Preferably the openings in the screen plate have a size of about 0.1 to 1 cm. Mixed slurry leaves the mix tank through an opening 254 in the bottom.

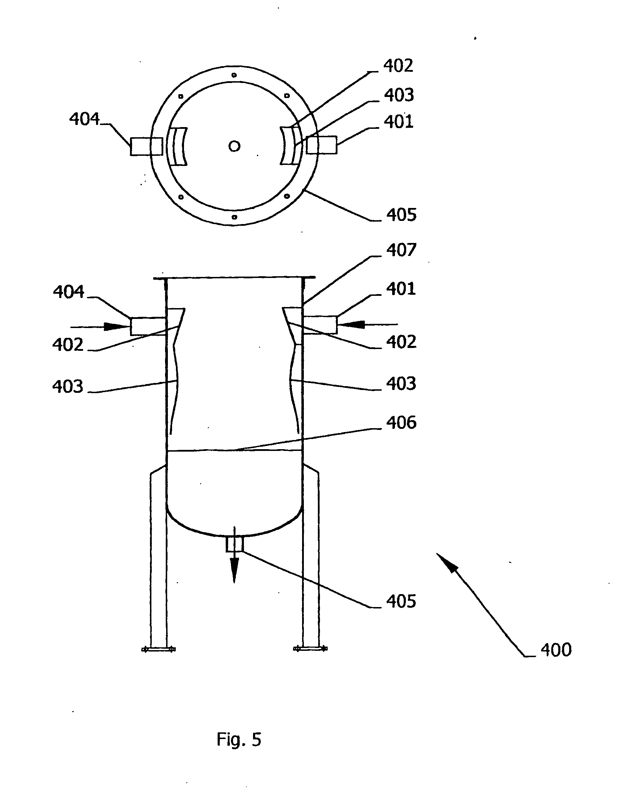

FIGURES 4 and 5 show schematic diagrams of a vacuum centrifuge 300 useful for removal of entrained bubbles from a liquid and a surge tank 400 useful for accumulating substantially bubble-free liquid without re-entrainment of bubbles. In the context of the vacuum centrifuge and surge tank, a "liquid" includes pumpable mixtures of solid particles in liquids, such as slurries of powders in liquids or slurries of finely ground polyurethane powder in polyol.

Referring now to FIG. 4, liquid to be de-gassed is delivered to inlet 320 of the centrifuge and travels through conduit 321 to bowl 310. Bowl 310 is attached to shaft 346 such that the bowl and shaft are rotated by suitable means, for example motor 345. When bowl 310 is rotated such that the tangential velocity is high (for example, between 10 and 100 m/s) the liquid spreads out thinly along the inside surface of the bowl, forcing bubbles to the surface under centripetal force and rupturing them. The liquid pools as far away from the axis of rotation as possible. A pickup tube 333 catches the liquid and directs it through conduit 334 to outlet 335. The rotation of the bowl imparts sufficient energy to the liquid to pump it through conduit 334. A baffle 329 is affixed to conduit 321 and serves to keep liquid from splashing out of the bowl.

The spinning bowl 310 is disposed within a vacuum chamber 325, which has front plate 326 and back plate 327 attached with gaskets to make the chamber vacuum tight. Plate 327 contains a bearing-and-seal assembly 340, through which shaft 346 rotates. Plate 326 optionally has a sealed sight glass 328 to allow viewing of the spinning bowl. Vacuum is applied to the chamber, for example through fitting 330. The low absolute pressure within the chamber (for example, 1 to 300 mbar) prevents bubbles from being re-entrained in the liquid as it is picked up (333) and directed toward outlet 335. Substantially bubble-free liquid is available from outlet 335. A drain 332 may be provided to facilitate cleanup and shutdown.

Referring now to FIG. 5, a liquid is delivered to inlet 401. Inlet 401 is positioned near the top of the tank, while outlet 405 is at the bottom of the tank. This arrangement of inlet and outlet provides for desirable first-in-first-out operation of the tank, but presents the potential for entrainment of bubbles due to jetting or splashing of the liquid. Weir 402 prevents the liquid from jetting into the tank, rather the liquid is diverted such that it runs down the wall of tank 407. Flexible weir extension 403 keeps the liquid running down the wall of the tank even at low flow rates. Liquid runs between the extension 403 and the wall of tank 407, and sucks extension 403 against the wall. This avoids any liquid dripping, "raining", or otherwise falling through an air space between inlet 401 and free surface 406. The extension 403 may be made of flexible plastic sheet, for example.

FIG. 5 depicts the tank 407 as partially full, as it would be during startup from an initially empty condition. During initial filling, the liquid has the furthest distance to travel from inlet 401 to the free surface 406, and there is potential for entrainment of bubbles. Forcing the liquid to run down the side of the tank with weir 402 and extension 403 greatly reduces the potential for bubble entrainment.

Surge tank 400 may have a plurality of inlets 401 with their associated weirs 402 and extensions 403. For example, inlet 401 may be used to receive liquid coming from outlet 335 of vacuum centrifuge 300, while inlet 404 may be used to receive liquid recirculating from outlet 405 through downstream processes.

The disclosed feedback control system, which provides for continuous operation of the disclosed mixing process with control over the slurry concentration and flow rate, is depicted in FIG. 6.

The flow rate of the finished, substantially bubble-free slurry is measured, for example by a flow meter 490, preferably by an in-line coriolis-effect mass flow meter. In-line coriolis-effect mass flow meters are well known to those of ordinary skill in the art and will not be discussed herein to avoid obscuring the present invention. As also well known to those of ordinary skill in the relevant art, many other instruments may be used to measure flow rate and the in-line coriolis-effect mass flow meter is an illustrative example only. The flow rate measurement 509 is used to control the rate of the pump 470 by means of flow rate control system 530.

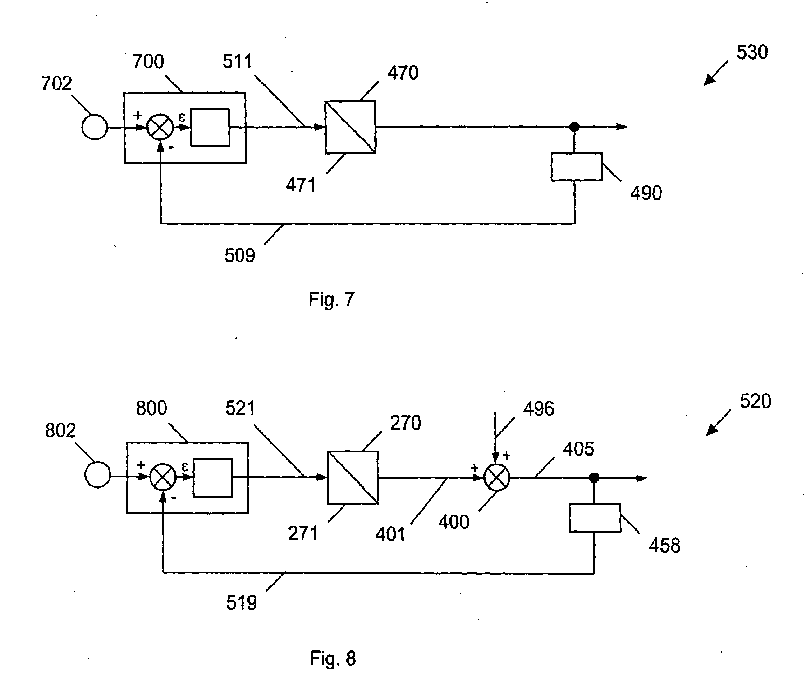

An embodiment of flow rate control system 530 is shown in FIG. 7. Similar reference numbers are used to describe and reference similar elements as shown and described in previous figures. New reference numbers are used to designate elements not previously designated as required. Flow rate controller 700 receives measurement data 509 from the output of pump 470 (for example by means of flow meter 490) and flow-rate data setpoint 702 as inputs, and provides a slurry output signal 511 to a variable-speed drive 471 for pump 470 (shown in FIG. 7 as one symbol having two reference numbers). Thus, flow rate control system 530 maintains the flow rate of slurry within a range of flow-rate data setpoint 702. As used in this specification, a data setpoint defines data that is specified from an external source (for example, a human operator or a separate process control system) to the process. For example, flow-rate data setpoint 702 could be the desired flow rate of a slurry of polyurethane powder in polyol to a flexible-polyurethane-foam manufacturing line, where a desired flow rate is chosen by the operator or chemist to provide the correct recipe for the desired foam properties. The flow-rate setpoint could be specified by the operator of the foam plant, or it could be supplied as a signal from the process-control system for the foam plant. Pump 470 is in fluid communication with surge tank 400.

Returning to FIG. 6, the amount of slurry in a surge tank 400 is measured, for example by a level sensor 458, preferably by a continuous ultrasonic level sensor. The fluid level measurement 519 is used to control the rate of the transfer pump 270 by means of fluid level control system 520.

An embodiment of fluid level control system 520 is shown in FIG. 8. Similar reference numbers are used to describe and reference similar elements as shown and described in previous figures. New reference numbers are used to designate elements not previously designated as required. As shown in FIGS. 6 and 8, fluid level controller 800 takes fluid level measurement data 519 from fluid level sensor 458 and fluid level data setpoint 802 as inputs, and provides a slurry output signal 521 to a variable-speed drive 271 for pump 270 (shown in FIG. 8 as one symbol having two reference numbers). The amount of material in surge tank 400 is affected by slurry added by means of pump 270 through input line 401, slurry removed by pump 470, and possibly slurry recirculating from downstream process through input line 496. Through output 405 of surge tank 400, a fluid level sensor 458 is used to determine the actual level amount of material (e.g, a level sensor) in surge tank 400 and sends fluid level measurement data 519 to fluid level controller 800. Thus, fluid level control system 520 maintains the amount of slurry in surge tank 400 within a range of fluid level data setpoint 802. Pump 270 is in fluid communication with mix tank 250.

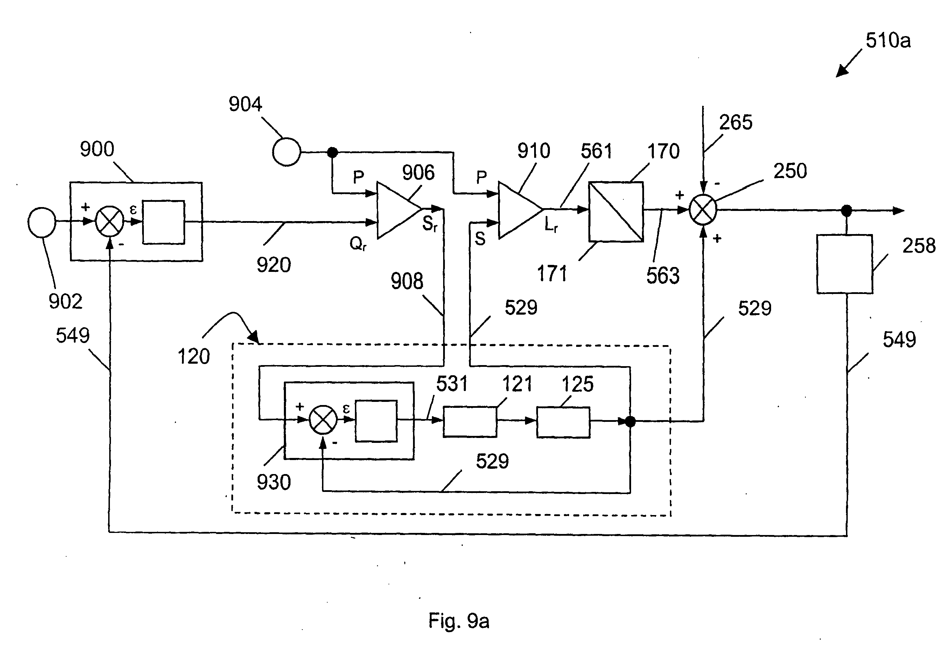

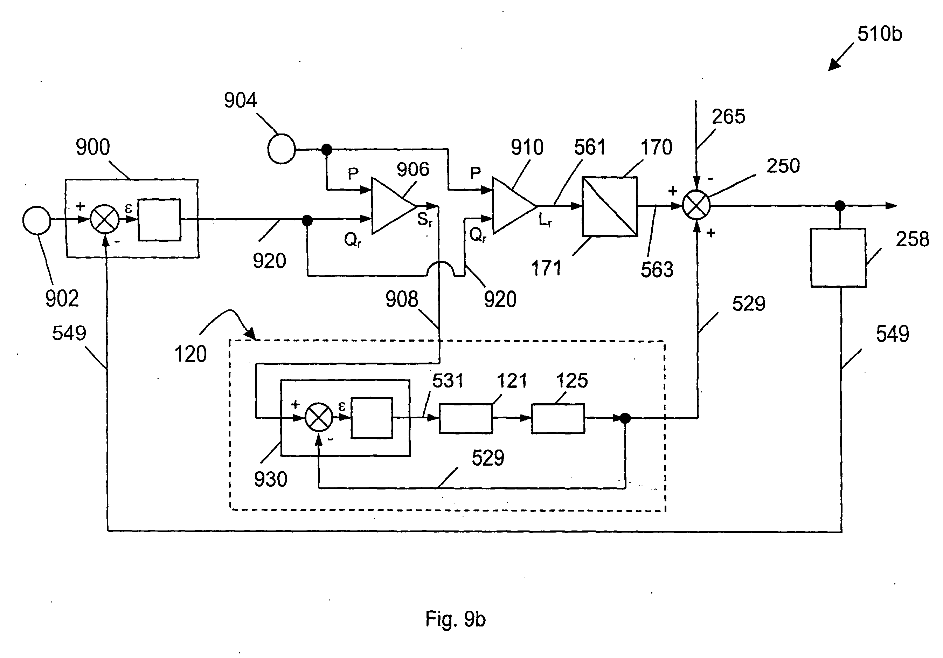

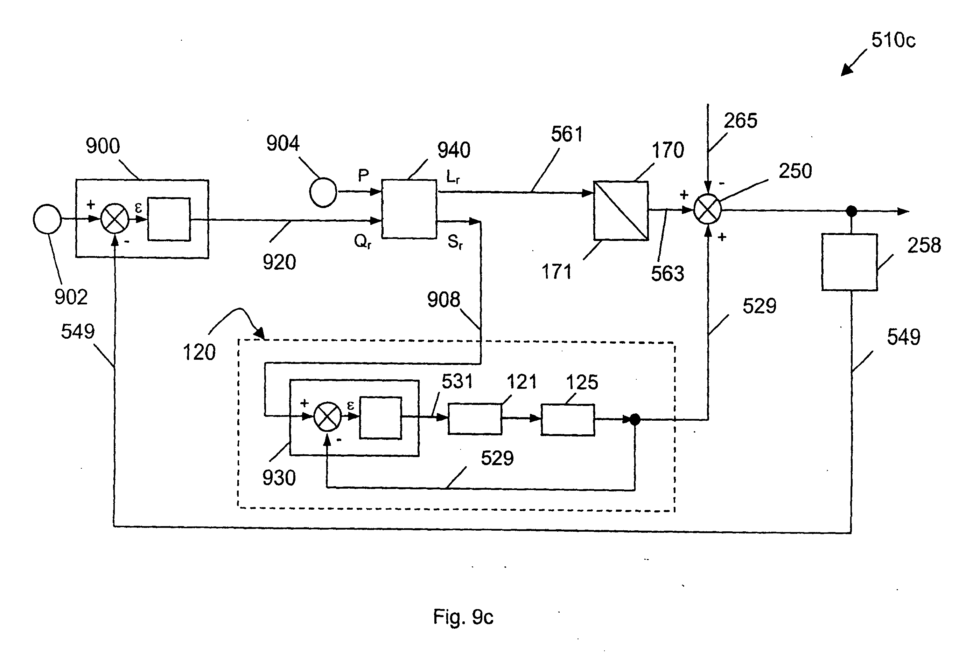

Returning now to FIG. 6, the amount of slurry in a mix tank 250 is measured, for example by a level sensor 258, preferably by a continuous capacitance level sensor. The measurement data 549 is used to control rate of powder addition to the mix tank and to control the rate of liquid addition to the mix tank by means of powder and fluid rate control system 510 (see also FIGS. 9a, 9b, and 9c) that takes measurement data 549 and provides an output signal 531 (a powder reference rate of addition to the mixer) to a means for adding powder to the mixer, such as powder feeder 120, and an output signal 561 (a liquid reference rate of addition to the mixer) to a means for adding liquid to the mix tank, such as liquid pump 170.

Thus, powder and fluid rate control system 510 can maintain the amount of slurry in mix tank 250 within a range of mix-tank level setpoint 902 as shown in FIGS. 6 and 9a-9c. Powder and fluid rate control system 510 also performs the function of calculating the rate of powder and rate of liquid addition to the mixer such that the ratio of the two rates, that is the concentration of the powder, is controlled at a predetermined setpoint concentration 904. Powder and fluid rate control system 510 may be provided with either or both of reference and actual flow rate signals.

FIG. 9a illustrates one embodiment of a powder and fluid rate control system 510. Similar reference numbers are used to describe and reference similar elements as shown and described in previous figures. New reference numbers are used to designate elements not previously designated as required. In this embodiment, the ratio of the actual rate of powder and the reference rate of liquid addition is controlled. As shown in FIGS. 6 and 9a, a sensor 258 (e.g, a level sensor) is used to sense the amount of material in mix tank 250 and sends a fluid level signal 549 to powder and fluid rate controller 900.

Referring back to FIG. 9a, powder and fluid rate controller 900 compares the amount of material in the mix tank represented by signal 549 to powder and fluid rate setpoint data 902, and provides an output data signal 920 that represents a reference slurry rate of addition to the mix tank, or $Q_r$. A first calculation element 906 performs an algebraic calculation of the reference powder rate of addition to the mix tank and provides output signal 908, or $S_r$, using $Q_r$ and predetermined setpoint concentration data 904, or P. The units for concentration P may be specified in many ways known in the art, for example, by mass or volume, as a fraction, percent, or ratio, or by some other measure of concentration such as a material property, for example, specific gravity, opacity, absorbance, etc.

In the polyurethane foam industry, a useful measure of the concentration of powder materials in polyol liquids is "parts per hundred parts of polyol" (pphp). A slurry of polyurethane powder in polyol with a concentration of 15 pphp has 15 parts by mass of polyurethane powder in 100 parts by mass of polyol, or a mass fraction of polyurethane powder of about 0.13. For example, if concentration P is specified in units of pphp, the calculation of $S_r$ performed by calculation element 906 is:

$$S_r = Q_r P / (P+100)$$

Still referring to FIG. 9a, output signal 908 representing $S_r$, the reference powder rate of addition to the mix tank, is received by a device that provides a means of adding powder to the mix tank 250 or the mixer 200, for example powder controller 930 of powder feeder 120.

The actual rate of powder addition to the mixer is measured, for example by a scale 125 (more specifically a time-derivative of a scale measurement). In this example, a loss-in-weight feeder is used as the scale. The measured actual rate of powder addition, 529, or S, is used to control the rate of powder addition to the mixer by means of a controller 930 that takes measurement 529 and reference powder rate of addition to the mix tank 908 as inputs, and provides an output signal 531 to a variable-speed drive 121 for powder feeder 120. Thus, powder controller 930 maintains the rate of powder addition to the mixer 200 or mix tank 250 within a range of a reference powder rate of addition to the mix tank 908. Commercially available loss-in-weight feeders generally include feeder 120, drive 121, scale 125, rate measurement 529, powder controller 930, and control signal 531 in an integrated package.

The measured actual rate of powder addition to the mixer, 529, is also used by a second calculation element 910 to determine algebraically the reference liquid rate of addition to the mix tank 561, or $L_r$, in order to synchronize the liquid and powder addition with the setpoint slurry concentration 904, or P. For example, if concentration P is specified in units of pphp, the calculation of $L_r$ performed by second calculation element 910 in this embodiment is:

$$L_r = 100\, S\, /\, P\,,$$

which uses the actual rate of powder addition and the setpoint concentration.

A signal representing $L_r$, the reference liquid rate of addition signal 561 to the mix tank 250, is received by a device that provides a means of adding liquid to mix tank 250 or the mixer 200, for example variable-speed drive 171 of pump 170. This control method provides excellent control of the slurry concentration because powder and liquid are always added to the mix tank together in the desired ratio corresponding to setpoint concentration data 904. Because the flow rate of slurry from process 100 at stream 495 (see FIG. 1) is controlled separately by control system 530 (see FIG. 6), excellent control of the slurry output flow rate is provided, even if the actual rate of powder addition 529 to mix tank 250 is varying. The amount of material in mix tank 250 is affected by the actual liquid addition 563, the actual powder addition 529, and the actual slurry flow rate from the mix tank 265 to downstream process. A sensor 258 (e.g, a level sensor) determines the amount of material in mix tank 250 and sends a signal 549 to powder and fluid rate controller 900.

An alternative embodiment of powder and fluid rate control system 510 is shown in detail by FIG. 9b. In this embodiment, powder and fluid rate control system 510 is substantially the same as that shown in FIG. 9a and described above, with the exception that output signal 920 (representing reference slurry rate of addition to the mix tank, or $Q_r$) is provided to calculation element 910 instead of signal 529 (representing actual powder rate of addition to the mix tank, or S). In this way, powder and fluid rate controller 900 is used to set the reference rates of addition to the mix tank for both the powder (908) and the liquid (561) with first and second calculation elements 906 and 910. In this embodiment, second calculation element 910 performs a different calculation. That is, it calculates $L_r$ from P and $Q_r$. For example, if concentration P is specified in units of pphp, the calculation of $L_r$ performed by calculation element 910 in this embodiment is:

$$L_r = 100\, Q_r\, /\, (P+100),$$

which uses the reference rate of slurry addition and the setpoint concentration.

Yet another embodiment of powder and fluid rate control system 510 is shown in detail in FIG. 9c. This embodiment is substantially the same as that shown in FIG 9b and described above, with the exception that first and second calculation elements 906 and 910 are replaced by a single calculation element 940, which calculates reference rates of addition to the mixer of both liquid (561, or $L_r$) and powder (908, or $S_r$) from reference slurry rate of addition to the mixer 920 ($Q_r$) and concentration setpoint 904 (P). For example, if concentration P is specified in units of pphp, the calculations performed by single calculation element 940 are:

$$L_r = 100\, Q_r\, /\, (P+100),$$

and

$$S_r = Q_r \, P \, / \, (P+100),$$

which use the reference rate of slurry addition and the setpoint concentration.

Powder and fluid rate controller 900, powder controller 930, fluid level controller 800, and flow rate controller 700 may be of any type known to one skilled in the art, including but not limited to proportional, on-off, proportional-integral-derivative (PID) controllers. The controllers as used in this system may also be, for example, analog, digital, software-based, programmable logic controllers (PLC), pneumatic, electrical, optical, hydraulic, etc. Similarly, the measurement data (509, 519, 529, and 549), the control signal data (511, 521, 531, 541, 551, 908, 920 and 561), and the setpoint data (702, 802, 902, and 904) may be obtained by any device known to those skilled in the art, including but not limited to analog, digital, pneumatic, electrical, optical, and hydraulic devices.

The process is started up by an initial partial fill of the mix tank 250 with a known amount of liquid sufficient to cover the outlet 210 of mixer 200. A known amount of powder is then added to the liquid in order to make a starting batch with the setpoint concentration. Once this initial batch has been made, the process may run continuously, with powder and liquid added to the mixer or mix tank, slurry material being drawn from the mix tank through the deaerator to the surge tank, slurry being drawn from the surge tank to downstream processes (for example, intermediate storage or polyurethane manufacture), and with the amount of material in the mix tank controlled within a range of setpoint 902, the amount of material in the surge tank controlled within a range of setpoint 802, the slurry concentration controlled within a range of setpoint 904, and the flow rate of slurry controlled within a range of setpoint 702.

EXAMPLE 1

The process is started up by an initial partial fill of the mix tank 250 with a known amount of liquid sufficient to cover the outlet 210 of mixer 200. A known amount of powder is then added to the liquid in order to make a starting batch with the setpoint concentration. Once this initial batch has been made, the process may run continuously as disclosed above.

A mass of 83.5 kg of VORANOL 3010A polyether polyol from Dow Chemical Co. was initially charged to a 30-gallon mix tank. To this tank was added 16.7 kg of a powder of finely ground polyurethane foam with a maximum particle size of 250 microns. The initial batch was mixed thoroughly using the mixer shown in FIG. 2. The slurry obtained had a concentration of entrained air of about 10% by volume.

Using the process shown in FIG. 1 and the control method in FIG. 6, slurry was pumped from the mix tank, through the vacuum centrifuge and surge tank, and into a storage vessel. The concentration setpoint was 20 pphp (i.e., 20 parts of powder per 100 parts of liquid, or 16.7% by mass), and the flow rate setpoint was 20 kg/min of slurry. Samples of the slurry were taken as it left the process to go into the storage vessel. These samples were tested for slurry concentration by separating the powder from a known weight of slurry by means of filtering the powder from the slurry, washing away the polyol with methylene chloride solvent, drying and weighing the powder. These samples were also tested for entrained bubble volume by filling a 1000-mL graduated cylinder with slurry and observing the change in volume over a 24-hour period at constant temperature. Any volume change indicates the presence of entrained bubbles in the slurry product. For example, a 1-mL volume change would correspond to 0.1% entrained bubble concentration by volume.

The results, as shown in TABLE 1, show no entrained air bubbles in the product slurry, and powder concentrations that are accurately near the setpoint concentration of 20 pphp.

TABLE 1

| sample ID | time (min:sec) | measured powder concentration (pphp) | measured volume % of bubbles in the slurry |
|---|---|---|---|
| A | 2:30 | 19.9 | 0 |
| B | 2:45 | 20.2 | not measured |
| C | 3:00 | 20.1 | 0 |
| D | 3:15 | 19.8 | 0 |

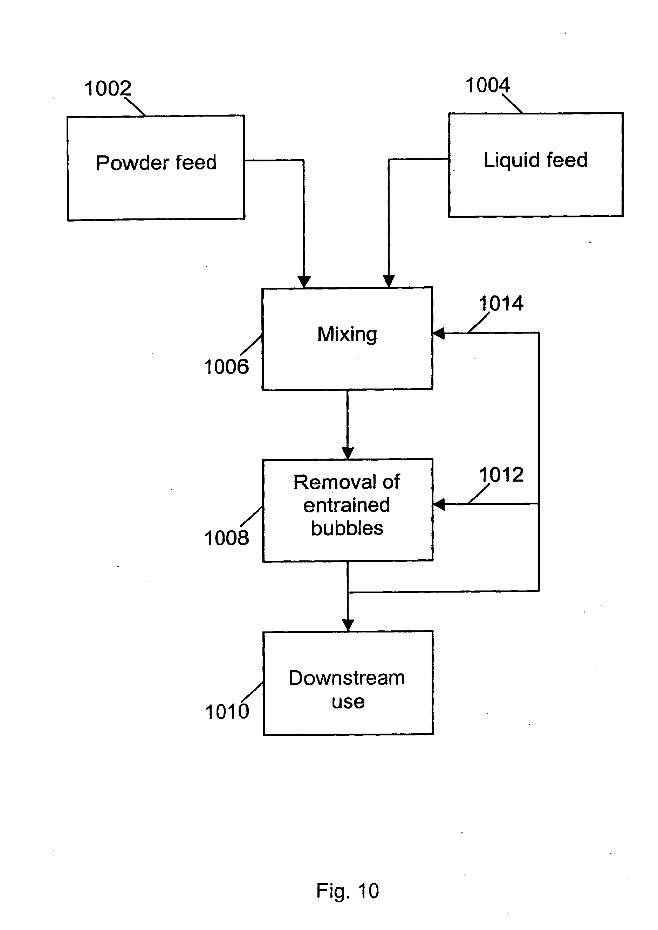

A flow chart 1000 for the continuous mixing of slurry with removal of entrained bubbles of the present method is shown in FIG. 10. Powder feed 1002 (for example, finely ground polyurethane powder) and liquid feed 1004 (for example, polyol) deliver powder and liquid respectively and both are delivered continuously to a mixing step 1006 (for example, using disclosed mixer 200) where the powder and liquid are contacted intimately and a slurry is produced. The slurry, which may contain entrained air bubbles, is delivered from the mixing step to a de-gassing step 1008, where entrained bubbles are continuously removed. For example, the de-gassing step may use a vacuum centrifuge and may further use the disclosed surge tank described below. Substantially bubble-free slurry is continuously delivered from said de-gassing step to a downstream use 1010. For example, downstream use 1010 may be the production of polyurethane foam. Optionally, some or all of the slurry may be recycled back to the de-gassing step via 1012 or back to the mixing step via 1014.

**Claims**

1. A control system for continuous mixing of slurry with removal of entrained bubbles comprising:

   a powder and fluid rate control (510), wherein said powder and fluid rate control (510) is coupled to a mixer (200) through a powder feeder (120) and a liquid pump (170) and further comprising:

      a first setpoint (SP1);
      a two-input powder and fluid rate controller (900) having,
      a first input (902) coupled to said first setpoint (SP1),
      a second input (549) coupled to a level sensor (258), and
      an output (920) coupled to a first input of calculation means (906,910,940);
      a second setpoint (SP2) coupled to a second input of said calculation means (906,914,940),
      said calculation means (906,910,940) having,
      a first output (908) coupled to said powder feeder (120); and
      a second output (561) coupled to said level sensor (258) through said liquid pump (170);

   a fluid level control (520) coupled to said mixer (200) and a surge tank (400); and
   a flow rate control (530) coupled to said surge tank (400).

2. A control system according to claim 1 wherein said calculation means comprises:

   a first two-input calculation element (906) having,
   a first input coupled to said output (920) of said two-input powder and fluid rate controller (900),
   a second input coupled to said second setpoint (SP2), and
   an output providing said first output (908) of said calculation means; and
   a second calculation element (910) having,
   a first input coupled to said second setpoint (SP2),
   a second input (529) coupled to said powder feeder (120) to receive an actual rate of powder addition signal, and
   an output providing said second output (561) of said calculation means.

3. A control system according to claim 1 wherein said calculation means comprises:

   a first two-input calculation element (906) having,
   a first input coupled to said output (920) of said two-input powder and fluid rate controller (900),
   a second input coupled to said second setpoint (SP2), and
   an output providing said first output (908) of said calculation means; and
   a second calculation element (910) having,
   a first input coupled to said second setpoint (SP2),
   a second input coupled to said output (920) of said two-input powder and fluid rate controller (900), and
   an output providing said second output (561) of said calculation means.

4. A control system according to claim 1 wherein said calculation means comprises:

   a two-input calculation element (940) having,
   a first input coupled to said output (920) of said two-input powder and fluid rate controller (900),
   a second input coupled to said second setpoint (SP2),
   a first output providing said first output (908) of said calculation means; and
   a second output providing said second output (561) of said calculation means.

**5.** A control system according to any preceding claim wherein said second output (561) of said calculation means (906,910,940) of said powder and fluid rate control (510) provides a liquid rate signal to a driver (171) of said liquid pump (170).

**6.** A control system according to claim 1 wherein said powder and fluid rate controller (900) receives a signal through said second input (549) from said level sensor (258) indicating the amount of a liquid and powder material in said mixer (200).

**7.** A control system according to claim 1 wherein said fluid level control (520) further comprises:

a fluid level setpoint (SP4);
a fluid level pump (270) having a pump driver (271) with a fluid level sensor (458); and
a two-input fluid level controller (800) having a first input coupled to said fluid level setpoint (SP4) and a second input (519) coupled to said fluid level sensor (458) and an output (521) coupled to said fluid level sensor (458) through said fluid level pump (270).

**8.** A control system according to claim 7 wherein said surge tank (400) is coupled between said fluid level pump (270) and said fluid level sensor (458).

**9.** A control system according to claim 1 wherein said flow rate control (530) further comprises:

a flow rate setpoint (SP3);
a flow rate pump (470) having a pump driver (471) with a flow rate sensor (490); and
a two-input flow rate controller (700) having a first input coupled to said flow rate setpoint (SP3) and a second input (509) coupled to said flow rate sensor (490) and an output (511) coupled to said flow rate sensor (490) through said flow rate pump (470).

**10.** A method for controlling the continuous mixing of slurry with removal of entrained bubbles comprising:

using a powder and fluid rate control (510) to control the rate at which powder is delivered to a mixer (200) through a powder feeder (120) and the rate at which liquid is delivered to a mixer (200) through a liquid pump (170), wherein using the powder and fluid rate control (510) further comprises:

providing a first setpoint (SP1) to a first input of a two-input powder and fluid rate controller (900),
providing a signal (549) from a level sensor (258) to a second input of said two-input powder and fluid rate controller (900), and
coupling an output (920) of said powder and fluid rate controller (900) to a first input of calculation means (906,910,940);
providing a second setpoint (SP2) to a second input of said calculation means (906,910,940),
coupling a first output (908) of said calculation means (906,910,940) to said powder feeder (120); and
coupling a second output (561) of said calculation means (906,910,940) to said level sensor (258) through said liquid pump (170);

using a fluid level control (520) coupled to said mixer (200) and a surge tank (400) to control a fluid level in the mixer (200); and
using a flow rate control (530) coupled to said surge tank (400) to control a flow rate from said surge tank (400).

**Patentansprüche**

**1.** Steuersystem zum kontinuierlichen Mischen einer Aufschlämmung unter Beseitigung von mitgeführten Bläschen, das aufweist :

eine Pulver- und Füssigkeitsdurchsatzsteuerung (510), wobei die Pulver- und Füssigkeitsdurchsatzsteuerung (510) durch eine Pulverzuführung (120) und eine Flüssigkeitspumpe (170) mit einem Mischer (200) Verbunden ist und ferner aufweist:

einen ersten Sollwert (SP1);

ein Pulver- und Füssigkeitsdurchsatzregelglied (900) mit zwei Eingängen mit:

einem ersten Eingang (902), der mit dem ersten Sollwert (SP1) verbunden ist,
einem zweiten Eingang (549), der mit einem Füllstandsensor (258) verbunden ist, und
einem Ausgang (920), der mit einem ersten Eingang einer Berechnungseinrichtung (906, 910, 940) verbunden ist;

einen zweiten Sollwert (SP2), der mit einem zweiten Eingang der Berechnungseinrichtung (906, 910, 940) verbunden ist,
wobei die Berechnungseinrichtung (906, 910, 940) hat:

einen ersten Ausgang (908), der mit der Pulverzuführung (120) verbunden ist, und
einen zweiten Ausgang (561), der durch die Flüssigkeitspumpe (170) mit dem Füllstandsensor (258) verbunden ist;

eine Flüssigkeitsstandsteuerung (520), die mit dem Mischer (200) und einem Ausdehnungsbehälter (400) verbunden ist; und
eine Durchsatzsteuerung (530), die mit dem Ausdehnungsbehälter (400) verbunden ist.

2. Steuersystem nach Anspruch 1, wobei die Berechnungseinrichtung aufweist:

ein erstes Berechnungselement (906) mit zwei Eingängen, mit:

einem ersten Eingang, der mit dem Ausgang (920) des Pulver- und Füssigkeitsdurchsatzregelglieds (900) mit zwei Eingängen verbunden ist,
einem zweiten Eingang, der mit dem zweiten Sollwert (SP2) verbunden ist, und
einem Ausgang, der eine erste Ausgabe (908) der Berechnungseinrichtung bereitstellt; und
ein zweites Berechnungselement (910) mit:

einem ersten Eingang, der mit dem zweiten Sollwert (SP2) verbunden ist,
einem zweiten Eingang (529), der mit der Pulverzuführung (120) verbunden ist, um einen tatsächlichen Durchsatz des Pulverzusatzsignals zu empfangen, und

einem Ausgang, der die zweite Ausgabe (561) der Berechnungseinrichtung bereitstellt.

3. Steuersystem nach Anspruch 1, wobei die Berechnungseinrichtung aufweist:

ein erstes Berechnungselement (906) mit zwei Eingängen mit:

einem ersten Eingang, der mit dem Ausgang (920) des Pulver- und Füssigkeitsdurchsatzregelglieds (900) mit zwei Eingängen verbunden ist,
einem zweiten Eingang, der mit dem zweiten Sollwert (SP2) verbunden ist, und
einem Ausgang, der die erste Ausgabe (908) der Berechnungseinrichtung bereitstellt; und

ein zweites Berechungselement (910) mit:

einem ersten Eingang, der mit dem zweiten Sollwert (SP2) verbunden ist,
einem zweiten Eingang, der mit dem Ausgang (920) des Pulver- und Füssigkeitsdurchsatzregelglieds (900) mit zwei Eingängen verbunden ist, und
einem Ausgang, der die zweite Ausgabe 561) der Berechnungseinrichtung verbunden ist.

4. Steuersystem nach Anspruch 1, wobei die Berechnungseinrichtung aufweist:

ein Berechnungselement (940) mit zwei Eingängen mit:

einem ersten Eingang, der mit dem Ausgang (920) des Pulver- und Füssigkeitsdurchsatzregelglieds (900) mit zwei Eingängen verbunden ist,
einem zweiten Eingang, der mit dem zweiten Sollwert (SP2) verbunden ist,

einem ersten Ausgang, der die erste Ausgabe (908) der Berechnungseinrichtung bereitstellt; und
einem zweiten Ausgang, der die zweite Ausgabe (561) der Berechnungseinrichtung bereitstellt.

5. Steuersystem nach einem der vorangehenden Ansprüche, wobei der zweite Ausgang (561) der Berechnungseinrichtung (906, 910, 940) der Pulver- und Füssigkeitsdturchsatzsteuerung (510) ein Flüssigkeitsdurchsatzsignal an einen Antrieb (171) der Flüssigkeitspumpe (170) liefert.

6. Steuersystem nach Anspruch 1, wobei das Pulver- und Füssigkeitsdurchsatzregelglied (900) über der zweiten Eingang (549) ein Signal von dem Füllstandsensor (258) empfängt, das die Menge an Flüssigkeit und Pulvermaterial in dem Mischer (200) anzeigt.

7. Steuersystem nach Anspruch 1, wobei die Flüssigkeitsstandsteuerung (520) ferner aufweist:

einen Flüssigkeitsstandsollwert (SP4);
eine Flüssigkeitsstandpumpe (270) mit einem Pumpenantrieb (271) mit einem Flüssigkeitsstandsensor (45E); und
eine Flüssigkeitsstandteuerung (800) mit zwei Eingängen, wobei ein erster Eingang mit dem Flüssigkeitsstandsollwert (SP4) verbunden ist und ein zweiter Eingang (519) mit dem Flüssigkeitsstandsensor (458) verbunden ist und ein Ausgang (521) durch die Flüssigkeitsstandpumpe (270) mit dem Flüssigkeitsstandsensor (458) verbunden ist.

8. Steuersystem nach Anspruch 7, wobei der Ausdehnungsbehälter (400) zwischen die Flüssigkeitsstandpumpe (270) und den Flüssigkeitsstandsensor (458) geschaltet ist.

9. Steuersystem nach Anspruch 1, wobei die Durchsatzsteuerung (530) ferner aufweist:

einen Durchsatzsollwert (SP3);
eine Durchsatzpumpe (470) mit einem Pumpenantrieb (471) mit einem Durchsatzsensor (490); und
eine Durchsatzsteuerung (700) mit zwei Eingängen, wobei ein erster Eingang mit dem Durchsatzsollwert (SP3) verbunden ist und ein zweiter Eingang (509) mit dem Durchsatzsensor (490) verbunden ist und ein Ausgang (511) durch die Durchsatzpumpe (470) mit dem Durchsatzsensor (190) verbunden ist.

10. Verfahren zur Steuerung des kontinuierlichen Mischens einer Aufschlämmung unter Beseitigung von mitgeführten Bläschen, das aufweist:

die Verwendung einer Pulver- und Füssigkeitsdurchsatzsteuerung (510), um den Durchsatz, mit dem Pulver über eine Pulverzuführung (120) an einen Mischer (200) zugeführt wird, und den Durchsatz, mit dem Flüssigkeit durch eine Flüssigkeitspumpe (170) an einen Mischer (200) zugeführt wird, zu steuern, wobei die Verwendung der Pulver- und der Füssigkeitsdurchsatzsteuerung (510) ferner aufweist:

Liefern eines ersten Sollwerts (SP1) an einen ersten Eingang eines Pulver- und Füssigkeitsdurchsatzregelglieds (900) mit zwei Eingängen,
Liefern eines Signals (549) von einem Fillstandsensor (258) an einen zweiten Eingang des Pulver- und Füssigkeitsdurchsatzregelglieds (900) mit zwei Eingängen, und
Verbinden eines Ausgangs (920) des Pulver- und Füssigkeitsdurchsatzregelglieds (900) mit einem ersten Eingang einer Berechnungseinrichtung (906, 910, 940);
Liefern eines zweiten Sollwerts (SP2) an einen zweiten Eingang der Berechnungseinrichtung (906, 910, 940),
Verbinden eines ersten Ausgangs (908) der Berechnungseinrichtung (906, 910, 940) mit der Pulverzuführung (120); und
Verbinden eines zweiten Ausgangs (561) der Berech-Verbinden eines zweiten Ausgangs (561) der Berechnungseinrichtung (906, 910, 940) durch die Flüssigkeitspumpe (170) mit dem Füllstandsensor (258);
Verwenden eines Flüssigkeitsstandsensors (520), der mit dem Mischer (200) und einem Ausdehnungsbehälter (400) verbunden ist, um einen Flüssigkeitsstand in dem Mischer (200) zu steuern; und
Verwenden einer Durchsatzsteuerung (530), die mit dem Ausdehnungsbehälter (400) verbunden ist, um einen Durchsatz aus dem Ausdehnungsbehälter (400) zu steuern.

**Revendications**

1. Système de commande pour le malaxage continu d'une suspension épaisse avec élimination des bulles entraînées, comprenant :

   une commande (510) de débit de poudre et de fluide, ladite commande (510) de débit de poudre et de fluide étant couplée à un malaxeur (200) par l'intermédiaire d'un moyen d'alimentation (120) en poudre et d'une pompe (170) de liquide, et comprenant en outre :

   un premier point de consigne (SP1) ;
   un régulateur (900) de débit de poudre et de fluide à deux entrées, comportant
   une première entrée (902) couplée audit premier point de consigne (SP1),
   une seconde entrée (549) couplée à un détecteur (258) de niveau, et
   une sortie (920) couplée à une première entrée d'un moyen de calcul (906, 910, 940) ;
   un second point de consigne (SP2) couplé à une seconde entrée dudit moyen de calcul (906, 910, 940), ledit moyen de calcul (906, 910, 940) ayant
   une première sortie (908) couplée audit moyen d'alimentation (120) en poudre ; et
   une seconde sortie (561) couplée audit détecteur (258) de niveau par l'intermédiaire de ladite pompe (170) de liquide ;
   une commande (250) de niveau de fluide couplée audit malaxeur (200) et à un réservoir-tampon (400) ; et
   une commande de débit (530) couplée audit réservoir-tampon (400).

2. Système de commande selon la revendication 1, dans lequel ledit moyen de calcul comprend :

   un premier élément de calcul (906) à deux entrées, ayant
   une première entrée couplée à ladite sortie (920) dudit régulateur (900) de débit de poudre et de fluide à deux entrées,
   une seconde entrée couplée audit second point de consigne (SP2), et
   une sortie constituant ladite première sortie (908) dudit moyen de calcul ; et
   un second élément de calcul (910) ayant :

   une première entrée couplée audit second point de consigne (SP2),
   une seconde entrée (529) couplée audit moyen d'alimentation (120) en poudre pour recevoir un signal de débit réel d'apport de poudre, et
   une sortie constituant ladite seconde sortie (561) dudit moyen de calcul.

3. Système de commande selon la revendication 1, dans lequel ledit moyen de calcul comprend :

   un premier élément de calcul (906) à deux entrées ayant
   une première entrée couplée à ladite sortie (920) dudit régulateur (900) de débit de poudre et de fluide à deux entrées,
   une seconde entrée couplée audit second point de consigne (SP2), et
   une sortie constituant ladite première sortie (908) dudit moyen de calcul ; et
   un second élément de calcul (910) ayant
   une première entrée couplée audit second point de consigne (SP2),
   une seconde entrée couplée à ladite sortie (920) dudit régulateur (900) de débit de poudre et de fluide à deux entrées, et
   une sortie constituant ladite seconde sortie (561) dudit moyen de calcul.

4. Système de commande selon la revendication 1, dans lequel ledit moyen de calcul comprend :

   un élément de calcul (940) à deux entrées ayant
   une première entrée couplée à ladite sortie (920) dudit régulateur (900) de débit de poudre et de fluide à deux entrées,
   une seconde entrée couplée audit second point de consigne (SP2),
   une première sortie constituant ladite première sortie (908) dudit moyen de calcul ; et
   une seconde sortie constituant ladite seconde sortie (561) dudit moyen de calcul.

**5.** Système de commande selon l'une quelconque des revendications précédentes, dans lequel ladite seconde sortie (561) dudit moyen de calcul (906, 910, 940) de ladite commande (510) de débit de poudre et de fluide fournit un signal de débit de liquide à un organe d'entraînement (171) de ladite pompe (170) de liquide.

**6.** Système de commande selon la revendication 1, dans lequel ledit régulateur (900) de débit de poudre et de fluide reçoit dudit détecteur (258) de niveau, via ladite seconde entrée (549), un signal indiquant la quantité d'un liquide et d'une matière en poudre dans ledit malaxeur (200).

**7.** Système de commande selon la revendication 1, dans lequel ladite commande (520) de niveau de fluide comprend en outre :

un point de consigne (SP4) de niveau de fluide ;
une pompe (270) de niveau de fluide ayant un organe d'entraînement (271) de pompe avec un détecteur (458) de niveau de fluide ; et
un régulateur (800) de niveau de fluide à deux entrées ayant une première entrée couplée audit point de consigne (SP4) de niveau de fluide et une seconde entrée (519) couplée audit détecteur (458) de niveau de fluide et une sortie (521) couplée audit détecteur (458) de niveau de fluide par l'intermédiaire de ladite pompe (270) de niveau de fluide.

**8.** Système de commande selon la revendication 7, dans lequel ledit réservoir tampon (400) est monté entre ladite pompe (270) de niveau de fluide et ledit détecteur (458) de niveau de fluide.

**9.** Système de commande selon la revendication 1, dans lequel ladite commande (530) de débit comprend en outre :

un point de consigne (SP3) de débit ;
une pompe (470) de débit ayant un organe d'entraînement (471) de pompe avec un détecteur (490) de débit ; et
un régulateur (700) de débit à deux entrées ayant une première entrée couplée audit point de consigne (SP3) de débit et une seconde entrée (509) couplée audit détecteur (490) de débit et une sortie (511) couplée audit détecteur (490) de débit par l'intermédiaire de ladite pompe (470) de débit.

**10.** Procédé pour commander le malaxage continu de suspension épaisse avec élimination des bulles entraînées, comprenant les étapes consistant à :

utiliser une commande (510) de débit de poudre et de fluide pour commander le débit auquel une poudre est fournie à un malaxeur (200) par l'intermédiaire d'un moyen d'alimentation (120) en poudre et le débit auquel le liquide est fourni à un malaxeur (200) par l'intermédiaire d'une pompe (170) de liquide, dans lequel l'utilisation de la commande (510) de débit de poudre et de liquide comporte en outre les étapes consistant à :

fournir un premier point de consigne (SP1) à une première entrée d'un régulateur (900) de débit de poudre et de fluide à deux entrées,
fournir un signal (549) provenant d'un détecteur (258) de niveau à une seconde entrée dudit régulateur (900) de débit de poudre et de fluide à deux entrées, et
coupler une sortie (920) dudit régulateur (900) de débit de poudre et de fluide à une première entrée du moyen de calcul (906, 910, 940) ;
fournir un deuxième point de consigne (SP2) à une seconde entrée dudit moyen de calcul (906, 910, 940),
coupler une première sortie (908) dudit moyen de calcul (906, 910, 940) audit moyen d'alimentation (120) en poudre ; et
coupler une seconde sortie (561) dudit moyen de calcul (906, 910, 940) audit détecteur (258) de niveau par l'intermédiaire de ladite pompe (170) de liquide ;
utiliser une commande (520) de niveau de fluide couplée audit malaxeur (200) et à un réservoir-tampon (400) pour commander un niveau de fluide dans le malaxeur (200) ; et
utiliser une commande (530) de débit couplée audit réservoir-tampon (400) pour commander un débit de sortie dudit réservoir-tampon (400).

Fig. 1

Fig. 2

Fig. 3

Fig. 4

Fig. 5

Fig. 6

EP 1 501 628 B1

LEGEND

------- MEASUREMENTS
======= CONTROL SIGNALS
——— PIPES

EP 1 501 628 B1

Fig. 7

Fig. 8

Fig. 9a

Fig. 9b

Fig. 9c

EP 1 501 628 B1

Fig. 10